# EUROPÄISCHE PATENTANMELDUNG

(11) **EP 3 431 288 A1**
(43) Veröffentlichungstag der Anmeldung: **23.01.2019**
(21) Anmeldenummer: 17182493.1
(22) Anmeldetag: 21.07.2017
(51) Int. Cl.: B33Y 10/00, B33Y 30/00, B29C 64/209, B29C 64/321, B29C 64/118

(54) **VERFAHREN UND DRUCKVORRICHTUNG ZUM HERSTELLEN VON OBJEKTEN**

(71) Anmelder: Technische Universität München, 80333 München (DE)
(72) Erfinder: GATTINGER, Johannes, 84028 Landshut (DE)
(74) Vertreter: Hoefer & Partner Patentanwälte mbB

(57) **Zusammenfassung**

Die Erfindung betrifft ein Verfahren zum Herstellen von Objekten umfassend die Schritte Zuführen eines strangförmigen Ausgangsmaterials (2) zu einem Druckkopf (1), wobei das strangförmige Ausgangsmaterial (2) ein Bauteilmaterial (3) und ein Verstärkungsmaterial (4) umfasst, Ablösen des Bauteilmaterials (3) von dem Verstärkungsmaterial (4) durch den Druckkopf (1) und Abführen des Verstärkungsmaterials (4), und Formen des Objekts durch Aufbringen des Bauteilmaterials (3) auf eine Plattform (5) durch den Druckkopf (1) sowie eine Druckvorrichtung (15) zum Herstellen von Objekten umfassend einen Druckkopf (1) mit einer Zuführungsöffnung (9) zum Zuführen eines strangförmigen Ausgangsmaterials (2), wobei das strangförmige Ausgangsmaterial (2) ein Bauteilmaterial (3) und ein Verstärkungsmaterial (4) umfasst, einen Ablösebereich (8), an dem das Bauteilmaterial (3) von dem Verstärkungsmaterial (4) ablösbar ist, eine Ausgabeöffnung (10) zum Ausgeben des Bauteilmaterials (3) und zum Aufbringen des Bauteilmaterials (3) auf eine Plattform (5), und eine Zusatzöffnung (11) zum Abführen des Verstärkungsmaterials (4) nach dem Ablösen des Bauteilmaterials (3).

## Beschreibung

Die vorliegende Erfindung betrifft ein Verfahren zum Herstellen von Objekten. Außerdem betrifft die Erfindung eine Druckvorrichtung zum Herstellen von Objekten. Insbesondere erfolgt das Herstellen der Objekte schichtweise. Somit handelt es sich insbesondere um ein 3D-Druckverfahren sowie um eine 3D-Druckvorrichtung.

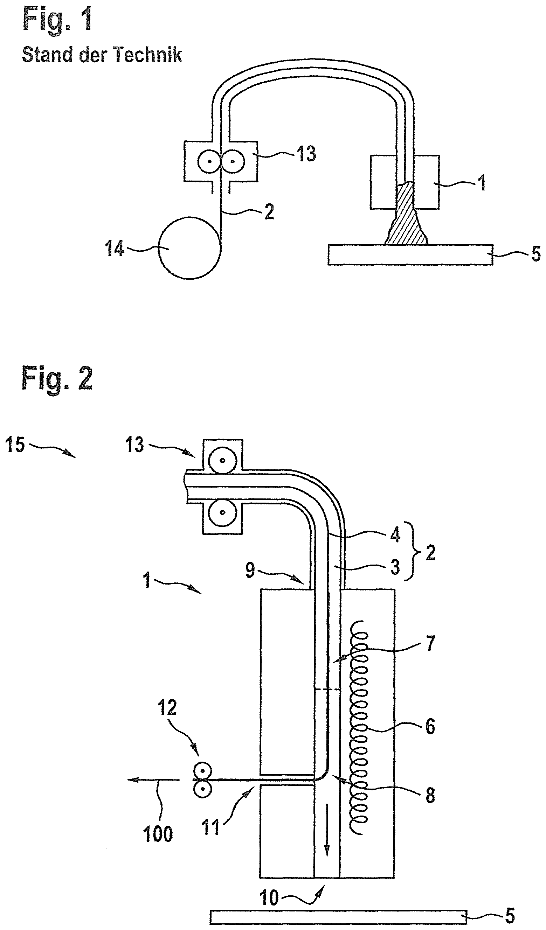

Aus dem Stand der Technik sind additive Fertigungsverfahren zum schichtweisen Herstellen von Objekten bekannt. Ein Beispiel hierfür ist das Fused Filament Fabrication Verfahren, bei dem ein bevorratetes Filament einem Druckkopf zugeführt wird, der dieses aufschmilzt und anschließend eine Schicht des herzustellenden Objekts auf eine Plattform aufbringt. Fig. 1 zeigt beispielhaft eine Fertigungsvorrichtung zum Durchführen eines bekannten additiven Fertigungsverfahrens gemäß dem Stand der Technik. Dabei befindet sich aufgewickeltes Filament auf einer Vorratsrolle 14. Von dieser Vorratsrolle 14 wird das aufgewickelte Filament als Ausgangsmaterial 2 von einem Extruder 13 einem Druckkopf 1 zugeführt. In dem Druckkopf 1 wird das Ausgangsmaterial 2 aufgeschmolzen und kann anschließend auf eine Plattform 5 aufgebracht werden. Auf diese Weise lässt sich eine Schicht auf der Plattform 5 formen, die eine Schicht des herzustellenden Objekts darstellt. Ist die Schicht gefertigt, so wird die Plattform 5 senkrecht zu dem Druckkopf 1 verfahren, so dass auf die zuvor gefertigte Schicht eine weitere Schicht aufgebracht werden kann. Sind alle Schichten gefertigt, so ist das Objekt fertiggestellt.

Es können mehrere Vorratsrollen 14 vorhanden sein, die unterschiedliche Filamente umfassen. So kann zusätzlich zu dem Ausgangsmaterial 2 ein Stützmaterial vorhanden sein, wobei das Stützmaterial nur zum vorübergehenden Stützen des auf die Plattform 5 aufgebrachten Ausgangsmaterials 2 dient. Nach dem vollständigen Fertigen des Objekts auf der Plattform 5 wird das Stützmaterial entfernt. Auf diese Weise lassen sich beispielsweise Bögen oder ähnliches einfach und aufwandsarm realisieren.

Es ist aus dem Stand der Technik weiterhin bekannt, dass die Verarbeitung von flexiblen Materialien im Fused Filament Fabrication Verfahren durch die Härte des Ausgangsmaterials 2 limitiert ist. So sind insbesondere Ausgangsmaterialien 2 mit niedriger Härte nicht verarbeitbar. Dies ist in dem Förderprinzip der Anlagen begründet. So muss der Extruder 13 eine Druckkraft auf das Ausgangsmaterial 2 aufbringen, um dieses in den Druckkopf 1 zu pressen. Somit wird das Ausgangsmaterial 2 in dem Bereich zwischen Extruder 13 und demjenigen Bereich, ab dem das Ausgangsmaterial 2 innerhalb des Druckkopfes 1 aufgeschmolzen wird, gestaucht. Bei zu weichen Materialien führt dies lokal zu einer Verdickung des Durchmessers, was wiederum dazu führen kann, dass das Ausgangsmaterial 2 im Druckkopf 1 stecken bleibt. Ebenso besteht die Gefahr, dass das Ausgangsmaterial 2 in Bereichen, in denen dieses nicht von einem Führungskanal umgeben ist, was beispielsweise unmittelbar hinter den Reibrädern des Extruders 13 der Fall ist, abknickt und/oder ausbricht.

Aus dem Stand der Technik sind außerdem Ansätze bekannt, ein verstärktes Ausgangsmaterial 2 zu verwenden. Dies ist beispielsweise in der EP 3 130 444 A1 beschrieben.

Es ist Aufgabe der Erfindung, ein Verfahren zum Herstellen von Objekten bereitzustellen, das bei einfacher und kostengünstiger Anwendung ein sicheres und zuverlässiges Fertigen von Objekten ermöglicht, unabhängig von einer Härte des Ausgangsmaterials. Ebenso ist es Aufgabe der Erfindung, eine entsprechende Druckvorrichtung anzugeben.

Gelöst wird die Aufgabe durch die Merkmale der unabhängigen Ansprüche. Die Unteransprüche haben bevorzugte Weiterbildungen der Erfindung zum Inhalt.

Somit wird die Aufgabe gelöst durch ein Verfahren zum Herstellen von Objekten, das die folgende Schritte umfasst: Zunächst erfolgt ein Zuführen eines strangförmigen Ausgangsmaterials zu einem Druckkopf. Das strangförmige Ausgangsmaterial umfasst ein Bauteilmaterial und ein Verstärkungsmaterial. In der vorliegenden Veröffentlichung ist das Wort "umfassen" als Synonym zu dem Wort "aufweisen" zu verstehen. Besonders vorteilhaft ist vorgesehen, dass das Bauteilmaterial das Verstärkungsmaterial umgibt. Insbesondere ist das Ausgangsmaterial zylinderförmig ausgebildet, wobei das Bauteilmaterial besonders vorteilhaft eine Hohlzylinderform aufweist und wobei innerhalb der Hohlzylinderform des Bauteilmaterials das Verstärkungsmaterial angeordnet ist. Anschließend erfolgt ein Ablösen des Bauteilmaterials von dem Verstärkungsmaterial durch den Druckkopf und ein Abführen des Verstärkungsmaterials. Schließlich erfolgt das Formen des Objekts durch Aufbringen des Bauteilmaterials auf eine Plattform durch den Druckkopf. Somit wird das Objekt ausschließlich durch das Bauteilmaterial gebildet. Das Verstärkungsmaterial dient lediglich zum Zuführen des Ausgangsmaterials zu dem Druckkopf. Sobald das Ausgangsmaterial dem Druckkopf zugeführt wird erfolgt das Ablösen des Bauteilmaterials von dem Verstärkungsmaterial, da das Verstärkungsmaterial nicht mehr benötigt wird. Durch das Verstärkungsmaterial ist jedoch während des Zuführens des Ausgangsmaterials zu dem Druckkopf ein Stauchen des Ausgangsmaterials verhinderbar oder zumindest verringerbar. Auch die Gefahr eines Ausbrechens und/oder Abknickens ist durch das Verstärkungsmaterial verringert oder vermieden.

Vorteilhafterweise ist vorgesehen, dass das Ablösen des Bauteilmaterials von dem Verstärkungsmaterial durch Erhitzen des Ausgangsmaterials mittels einer Heizvorrichtung innerhalb des Druckkopfes erfolgt. Somit erfolgt ein Abschmelzen des Bauteilmaterials von dem Verstärkungsmaterial. Dabei ist vorgesehen, dass das Verstärkungsmaterial einen höheren Schmelzpunkt aufweist als das Bauteilmaterial. Somit wird das Aufschmelzen des Bauteilmaterials, das zum Fertigen des Objekts auf der Plattform notwendig ist, zusätzlich dafür verwendet, das Bauteilmaterial von dem Verstärkungsmaterial abzulösen. Somit ist das Verfahren einfach und aufwandsarm durchführbar, da keine zusätzlichen Maßnahmen getroffen werden müssen, um das Bauteilmaterial von dem Verstärkungsmaterial abzulösen. Vielmehr wird auf das grundsätzlich erforderliche Erhitzen des Ausgangsmaterials zurückgegriffen. Somit muss lediglich das Verstärkungsmaterial aus dem geschmolzenen Bauteilmaterial abgeführt werden, um das Ablösen des Bauteilmaterials von dem Verstärkungsmaterial zu ermöglichen.

Alternativ oder zusätzlich kann auch eine Trennkraft zwischen Bauteilmaterial und Verstärkungsmaterial aufgebracht werden, um das Bauteilmaterial von dem Verstärkungsmaterial abzulösen. Dies erfolgt insbesondere dann, wenn das Bauteilmaterial nicht oder nicht vollständig aufgeschmolzen werden soll, um Bauteilmaterial und Verstärkungsmaterial zu trennen. Das Bauteilmaterial wird in dieser Alternative besonders vorteilhaft mittels eines Schälvorgangs von dem Verstärkungsmaterial abgelöst, ohne das Ausgangsmaterial zu erhitzten. Dies wird vorteilhafterweise dadurch erreicht, dass im Ausgangsmaterial das Verstärkungsmaterial an einer Außenseite des Bauteilmaterials angeordnet ist. So kann das Bauteilmaterial weiterhin strangförmig, insbesondere zylinderförmig, ausgebildet sein, wobei das Verstärkungsmaterial exzentrisch zu der Zylinderform angeordnet ist.

Weiterhin ist bevorzugt vorgesehen, dass das Zuführen des Ausgangsmaterials durch Aufbringen einer Zugkraft auf das Verstärkungsmaterial erfolgt. Dadurch ist ermöglicht, das Ausgangsmaterial in den Druckkopf zu ziehen. Da das Verstärkungsmaterial nicht aufgeschmolzen wird, ist somit die Möglichkeit des Aufbringens einer Zugkraft vorhanden. Dies ermöglicht einerseits das einfache und aufwandsarme Zuführen des Ausgangsmaterials zu dem Druckkopf, andererseits ist verhindert, dass das Ausgangsmaterial ausbricht oder abknickt. Durch die Zugkraft ist, wie auch durch die Druckkraft im Stand der Technik, das Ausstoßen des geschmolzenen Bauteilmaterials aus dem Druckkopf ermöglicht, indem noch nicht erhitztes Ausgangsmaterial dem Druckkopf zugeführt wird. Somit lässt sich zuverlässig und genau Einstellen, wie viel Material den Druckkopf verlassen soll.

Besonders vorteilhaft wird das Verstärkungsmaterial nach Ablösen des Bauteilmaterials aus dem Druckkopf herausgeführt. Dabei ist der Begriff "nach" in diesem Zusammenhang räumlich zu verstehen. Dies bedeutet, dass das Ausgangsmaterial zunächst einem Bereich des Druckkopfs zugeführt wird, an dem ein Ablösen des Bauteilmaterials von dem Verstärkungsmaterial erfolgt. In einem in Förderrichtung des Ausgangsmaterials gesehen nachfolgenden Bereich erfolgt das Abführen des Verstärkungsmaterials durch Herausführen des Verstärkungsmaterials aus dem Druckkopf. Die Zugkraft auf das Verstärkungsmaterial wird außerhalb des Druckkopfes aufgebracht. Dies bedeutet, dass eine Zugvorrichtung einfach und aufwandsarm außerhalb des Druckkopfes bereitgestellt werden kann, durch die eine Zugkraft auf das Verstärkungsmaterial aufgebracht werden kann. Durch besagte Zugkraft wird das Ausgangsmaterial einfach und aufwandsarm in den Druckkopf eingezogen, so dass das Bauteilmaterial des Ausgangsmaterials auch ein Material mit sehr geringer Härte sein kann. Somit lassen sich durch das beschriebene Verfahren einfach und aufwandsarm Ausgangsmaterialien unterschiedlicher Materialeigenschaften verarbeiten, was im Stand der Technik nicht möglich ist.

Die Erfindung betrifft außerdem eine Druckvorrichtung zum Herstellen von Objekten umfassend einen Druckkopf. Der Druckkopf umfasst eine Zuführungsöffnung, einen Ablösebereich, eine Ausgabeöffnung sowie eine Zusatzöffnung. Dabei ist vorgesehen, dass die Zuführöffnung zum Zuführen eines strangförmigen Ausgangsmaterials dient. Das strangförmige Ausgangsmaterial umfasst ein Bauteilmaterial und ein Verstärkungsmaterial. Dabei ist vorgesehen, dass das Ausgangsmaterial innerhalb des Druckkopfes aufgeteilt wird, wobei das Bauteilmaterial von der Zuführungsöffnung zu der Ausgabeöffnung transportiert wird, während das Verstärkungsmaterial von der Zuführungsöffnung zu der Zusatzöffnung transportiert wird. Dazu weist der Druckkopf den Ablösebereich auf, an dem das Bauteilmaterial von dem Verstärkungsmaterial ablösbar ist. Durch die Ausgabeöffnung ist ermöglicht, das Bauteilmaterial aus dem Druckkopf auszugeben, um das Bauteilmaterial auf eine Plattform aufzubringen. Durch das Aufbringen des Bauteilmaterials auf die Plattform erfolgt insbesondere das schichtweise Herstellen des Objekts. Die Zusatzöffnung dient zum Abführen des Verstärkungsmaterials von dem Druckkopf nach dem Ablösen des Bauteilmaterials. Somit ist ermöglicht, dass das Bauteilmaterial allein zum Fertigen des Objekts verwendet wird. Das Verstärkungsmaterial dient lediglich zum sicheren und zuverlässigen Zuführen des Ausgangsmaterials zum Druckkopf. Der Druckkopf weist bevorzugt außerdem eine Heizvorrichtung auf. Die Heizvorrichtung ist zumindest vor und/oder an dem Ablösebereich angeordnet. Die Heizvorrichtung dient zum Erhitzen des Ausgangsmaterials und zum Abschmelzen des Bauteilmaterials von dem Verstärkungsmaterial. Auf diese Weise ist erreicht, dass das Bauteilmaterial in dem Ablösebereich in einem flüssigen Zustand vorliegt. Somit kann das Verstärkungsmaterial einfach und aufwandsarm abgeführt werden. Dabei ist vorgesehen, dass das Verstärkungsmaterial einen höheren Schmelzpunkt aufweist als das Bauteilmaterial, so dass das Verstärkungsmaterial in dem Ablösebereich nicht in einem flüssigen Zustand vorliegt.

Alternativ oder zusätzlich kann der Druckkopf ein an oder in dem Ablösebereich angeordnetes Schälwerkzeug zum Trennen des Bauteilmaterials von dem Verstärkungsmaterial umfassen. Durch ein Schälwerkzeug lassen sich Verstärkungsmaterial und Bauteilmaterial trennen, ohne dass das Bauteilmaterial vollständig aufgeschmolzen werden muss.

Die Zusatzöffnung ist vorteilhafterweise an dem Ablösebereich angeordnet. Somit erfolgt das Trennen von Verstärkungsmaterial und Bauteilmaterial zunächst in dem Ablösebereich, wobei während oder nach dem Ablösen des Bauteilmaterials von dem Verstärkungsmaterial das Abführen des Verstärkungsmaterials durch die Zusatzöffnung erfolgt. Das Bauteilmaterial hingegen wird vorteilhafterweise weitertransportiert und erreicht somit die Ausgabeöffnung zum Ausgeben des Bauteilmaterials aus dem Druckkopf.

Die Druckvorrichtung weist außerdem bevorzugt eine Zugvorrichtung zum Aufbringen einer Zugkraft auf das Verstärkungsmaterial auf. Die Zugvorrichtung ist insbesondere in einer Förderrichtung des Verstärkungsmaterials hinter der Zusatzöffnung des Druckkopfes und somit außerhalb des Druckkopfes angeordnet. Somit ist eine Zugkraft auf das Verstärkungsmaterial aufbringbar, was zu einer Zugkraft auf das Ausgangsmaterial führt. Das Ausgangsmaterial ist somit über besagte Zugkraft in den Druckkopf einziehbar. Gleichzeitig erfolgt durch das Einziehen des Ausgangsmaterials das Ausstoßen des aufgeschmolzenen Bauteilmaterials aus der Ausgabeöffnung. Durch die Zugkraft ist sichergestellt, dass während des Zuführens des Ausgangsmaterials zu der Zuführöffnung des Druckkopfes keinerlei Ausbrechen und/oder Abknicken des Ausgangsmaterials erfolgt. Dies ermöglicht das Verarbeiten von unterschiedlichen Bauteilmaterialien, wobei hinsichtlich Materialeigenschaften wie insbesondere hinsichtlich der Härte keinerlei Beschränkungen wie im Stand der Technik vorhanden sein müssen.

Die Druckvorrichtung weist bevorzugt weiterhin einen Extruder auf. Durch den Extruder ist eine Druckkraft auf das Ausgangsmaterial aufbringbar, sodass das Ausgangsmaterial von dem Extruder in die Zuführungsöffnung des Druckkopfes drückbar ist. Auch der Extruder ist somit insbesondere außerhalb des Druckkopfes angeordnet. Der Extruder dient jedoch nicht wie im Stand der Technik zum Aufbringen der gesamten benötigten Kraft auf das Ausgangsmaterial zum Einführen in den Druckkopf, vielmehr ermöglicht der Extruder vorteilhafterweise das Unterstützen des Einziehens des Ausgangsmaterials in den Druckkopf. So ist besonders vorteilhaft vorgesehen, dass sich die Kraft auf das Ausgangsmaterial aus einer Zugkraft, insbesondere durch die Zugvorrichtung, und einer Druckkraft, insbesondere durch den Extruder, zusammensetzt. Durch die unterstützende Wirkung des Extruders ist ermöglicht, eine ausreichende Kraft auf das Ausgangsmaterial aufzubringen, falls die Zugkraft allein, insbesondere aufgrund der Schmelzviskosität des Bauteilmaterials, nicht ausreicht.

Bevorzugt ist außerdem vorgesehen, dass das Bauteilmaterial ein thermoplastischer Kunststoff ist. Der thermoplastische Kunststoff ist dabei innerhalb des Druckkopfes aufschmelzbar und somit in einem flüssigen Zustand auf die Plattform aufbringbar. Das Verstärkungsmaterial ist insbesondere ein Draht und/oder eine Faser und/oder ein Faden. Dabei ist vorgesehen, dass das Verstärkungsmaterial von dem Druckkopf nicht aufschmelzbar ist und somit stets in einer festen Form vorliegt. Auf diese Weise ist sichergestellt, dass das Verstärkungsmaterial nicht zum Fertigen des Objekts verwendet werden kann, sondern ausschließlich zum Zuführen des Ausgangsmaterials zu dem Druckkopf dient.

Weitere Einzelheiten, Vorteile und Merkmale der vorliegenden Erfindung ergeben sich aus der nachfolgenden Beschreibung von Ausführungsbeispielen anhand der Zeichnungen. Es zeigt:
- Fig. 1: eine schematische Ansicht einer Fertigungsvorrichtung gemäß dem Stand der Technik,
- Fig. 2: eine schematische Ansicht einer Druckvorrichtung gemäß einem ersten Ausführungsbeispiel der Erfindung,
- Fig. 3: eine schematische Ansicht einer ersten Alternative eines Druckkopfes einer Druckvorrichtung gemäß einem zweiten Ausführungsbeispiel der Erfindung, und
- Fig. 4: eine schematische Ansicht einer zweiten Alternative eines Druckkopfes der Druckvorrichtung gemäß dem zweiten Ausführungsbeispiel der Erfindung.

Fig. 1 zeigt eine Fertigungsvorrichtung gemäß dem Stand der Technik, die eingangs bereits beschrieben wurde.

Fig. 2 zeigt schematisch eine Druckvorrichtung 15 gemäß einem ersten Ausführungsbeispiel der Erfindung umfassend einen Druckkopf 1. Mit der Druckvorrichtung 15 ist insbesondere ein Verfahren gemäß einem Ausführungsbeispiel der Erfindung durchführbar.

Der Druckkopf 1 umfasst eine Zuführungsöffnung 9, durch die ein Ausgangsmaterial 2 zuführbar ist. Das Ausgangsmaterial 2 ist strangförmig ausgebildet und umfasst ein Bauteilmaterial 3 und ein Verstärkungsmaterial 4. Das Bauteilmaterial 3 ist beispielsweise ein thermoplastischer Kunststoff, während das Verstärkungsmaterial insbesondere ein Draht und/oder ein Faden und/oder eine Faser und/oder ein vergleichbarer Stoff ist. Dabei ist insbesondere vorgesehen, dass das Bauteilmaterial 3 das Verstärkungsmaterial 4, insbesondere hohlzylinderförmig, umgibt. Das Verstärkungsmaterial 4 kann vorteilhafterweise konzentrisch innerhalb des Bauteilmaterials angeordnet sein, alternativ auch exzentrisch.

Innerhalb des Druckkopfes 1 ist ein Ablösebereich 8 vorhanden. Dabei ist vorgesehen, dass das Ausgangsmaterial 2 durch eine Heizvorrichtung 6 erhitzt wird, so dass das Bauteilmaterial 3 in dem Ablösebereich 8 in einem flüssigen Zustand vorliegt. Durch Schmelzen des Bauteilmaterials 3 vor bzw. in dem Ablösebereich 8 erfolgt ein Ablösen des Bauteilmaterials 3 von dem Verstärkungsmaterial 4. Der Druckkopf 1 weist somit zwei unterschiedliche Bereiche auf:
In einem Zuführungsbereich 7 liegt das Bauteilmaterial 3 in einem festen Zustand vor. Somit liegt das Ausgangsmaterial 2 unverändert vor. Dies bedeutet, dass Bauteilmaterial 3 und Verstärkungsmaterial 4 fest miteinander verbunden sind. Insbesondere ist ermöglicht, dass Kräfte zwischen Bauteilmaterial 3 und Verstärkungsmaterial 4 übertragen werden können. In dem Ablösebereich 8 hingegen liegt das Verstärkungsmaterial 4 weiterhin in einem festen Zustand vor, während das Bauteilmaterial 3 verflüssigt ist. Somit ist das Bauteilmaterial 3 von dem Verstärkungsmaterial 4 abgelöst, eine Kraftübertragung auf das Bauteilmaterial ist somit nicht mehr oder nur in nicht nennenswertem Umfang möglich.

An oder in dem Ablösebereich 8 befindet sich eine Zusatzöffnung 11. Die Zusatzöffnung 11 dient zum Abführen des Verstärkungsmaterials 4. Das Verstärkungsmaterial ist durch die Zusatzöffnung 11 aus dem Druckkopf 1 herausführbar. Das aufgeschmolzene Bauteilmaterial 3 hingegen wird zu einer Ausgabeöffnung 10 transportiert, an der das Bauteilmaterial 3 aus dem Druckkopf 1 ausgegeben wird. Das Ausgeben des Bauteilmaterials 3 erfolgt insbesondere auf eine Plattform 5, so dass auf der Plattform 5 das Objekt fertigbar ist.

Das Objekt wird auf der Plattform 5 insbesondere schichtweise gefertigt. Dies bedeutet, dass zwischen Plattform 5 und Druckkopf 1 eine zweidimensionale Bewegung senkrecht zur Normalen der Plattform 5 durchgeführt werden kann. Somit kann eine zweidimensionale Schicht auf die Plattform 5 aufgebracht werden. Ist die besagte Schicht vollständig aufgebracht, so wird die Plattform 5 relativ zu dem Druckkopf 1 senkrecht bewegt. Dies ermöglicht ein Aufbringen einer weiteren Schicht auf die zuvor gefertigte, auf die Plattform 5 aufgebrachte Schicht. Sind alle Schichten gefertigt, so ist das Objekt fertiggestellt.

Die Druckvorrichtung 15 weist außerdem eine Zugvorrichtung 12 auf. Die Zugvorrichtung 12 dient zum Aufbringen einer Zugkraft 100 auf das Verstärkungsmaterial 4. Dabei ist die Zugvorrichtung 12 in Förderrichtung des Verstärkungsmaterials 4 hinter der Zusatzöffnung 11 und damit außerhalb des Druckkopfes 1 angeordnet. Somit ist ermöglicht, das Ausgangsmaterial 2 durch die Zugkraft 100 in den Druckkopf 1, insbesondere durch die Zuführungsöffnung 9, einzuziehen. Durch die Zugkraft 100 ist dabei ein Stauchen des Ausgangsmaterials 2 verhindert. Auch kann das Ausgangsmaterial 2 nicht abknicken und/oder ausbrechen.

Durch das Zuführen des Ausgangsmaterials 2 erfolgt außerdem ein Ausstoßen des aufgeschmolzenen Bauteilmaterials 3 aus dem Ablösebereich 8 durch die Ausgabeöffnung 10. Somit kann durch die Zugvorrichtung 12 die Menge des ausgestoßenen Bauteilmaterials 3 aus dem Druckkopf 1 reguliert werden.

Sollte aufgrund einer Schmelzviskosität des Bauteilmaterials 3 und/oder aufgrund von anderen Effekten die Zugkraft 100 allein nicht ausreichend sein, um das Ausgangsmaterial 2 in den Druckkopf 1 einzuführen und gleichzeitig das aufgeschmolzene Bauteilmaterial 3 aus dem Druckkopf 1 auszustoßen, so kann insbesondere ein Extruder 13 wie im Stand der Technik bereitgestellt werden. Der Extruder 13 dient zum Aufbringen einer unterstützenden Druckkraft auf das Ausgangsmaterial 2. Dabei ist vorgesehen, dass diese Druckkraft lediglich unterstützend wirkt, so dass weiterhin sichergestellt ist, dass ein Ausbrechen und/oder Abknicken des Ausgangsmaterials 2 ebenso wie eine Stauchung des Ausgangsmaterials 2 verhindert ist. Durch den Extruder 13 lässt sich jedoch die Kraft erhöhen, mit der das Ausgangsmaterial 2 durch die Zuführungsöffnung 9 gepresst wird.

Durch die Druckvorrichtung 15 und den Druckkopf 1 ist somit ermöglicht, beliebige Ausgangsmaterialien 2 zu verarbeiten. Im Gegensatz zum Stand der Technik sind keine Restriktionen hinsichtlich Materialeigenschaften des Ausgangsmaterials, wie beispielsweise hinsichtlich der Härte des Ausgangsmaterials 2, vorgegeben. Vielmehr lässt sich eine große Vielfalt von unterschiedlichen Ausgangsmaterialien 2 verarbeiten. Auch ist ein Ausfall des Druckkopfes aufgrund von gestauchten und/oder abgeknickten und/oder ausgebrochenen Ausgangsmaterialien 2 verhindert. Somit kann mittels der Druckvorrichtung 15 das Objekt auf der Plattform 5 sehr sicher und zuverlässig gefertigt werden.

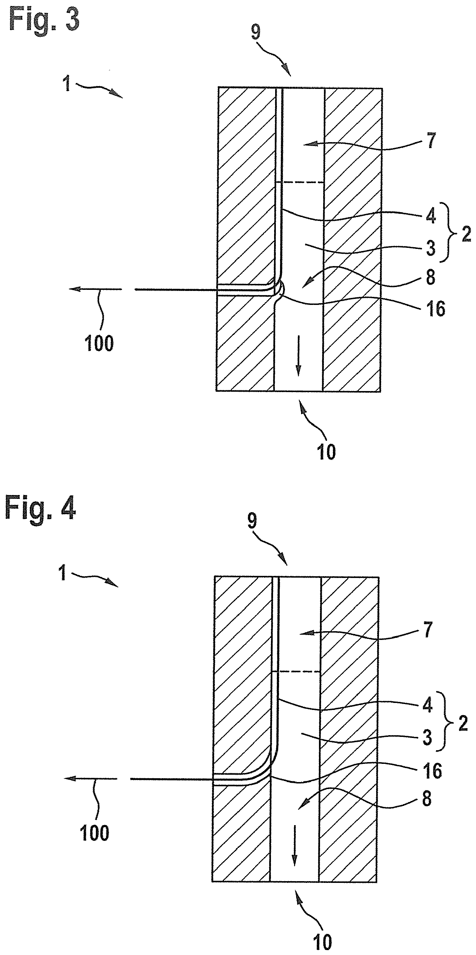

Die Figuren 3 und 4 zeigen jeweils einen Druckkopf 1 einer Druckvorrichtung 15 (nicht gezeigt) gemäß einem zweiten Ausführungsbeispiel der Erfindung. Die in Figur 3 und 4 gezeigten Druckköpfe 1 können jeweils den Druckkopf 1 gemäß dem ersten Ausführungsbeispiel ersetzten, um so die Druckvorrichtung 15 gemäß dem zweiten Ausführungsbeispiel zu erhalten. Somit ist vorgesehen, dass sich die Druckvorrichtung 15 gemäß dem ersten Ausführungsbeispiel und dem zweiten Ausführungsbeispiel lediglich in dem Druckkopf 1 unterscheiden.

Während in dem ersten Ausführungsbeispiel das Bauteilmaterial 3 aufgeschmolzen wird, um dieses von dem Verstärkungsmaterial 4 zu trennen, erfolgt in dem zweiten Ausführungsbeispiel das Einbringen einer Trennkraft zwischen Bauteilmaterial 3 und Verstärkungsmaterial 4, ohne das Bauteilmaterial 3 aufzuschmelzen oder vollständig aufzuschmelzen. Dazu ist ein Schälwerkzeug 16 vorgesehen, durch das das Bauteilmaterial 3 von dem Verstärkungsmaterial 4 abgeschält wird. Ein Aufschmelzen des Bauteilmaterials 3 zum Aufbringen desselben auf die Plattform 5 kann nach dem Trennen von Bauteilmaterial 3 und Verstärkungsmaterial 4 erfolgen.

Das Verstärkungsmaterial 4 ist bevorzugt exzentrisch an einer Außenseite des Bauteilmaterials 3 angeordnet. Somit ist ein einfaches und aufwandsarmes Abschälen des Bauteilmaterials 3 von dem Verstärkungsmaterial 4 durch das Schälwerkzeug 16 ermöglicht. Figur 3 zeigt eine erste Alternative des Schälwerkzeugs 16, während in Figur 4 eine zweite Alternative des Schälwerkzeugs 16 dargestellt ist.

### Bezugszeichenliste

- 1: Druckkopf
- 2: Ausgangsmaterial
- 3: Bauteilmaterial
- 4: Verstärkungsmaterial
- 5: Plattform
- 6: Heizvorrichtung
- 7: Zuführungsbereich
- 8: Ablösebereich
- 9: Zuführungsöffnung
- 10: Ausgabeöffnung
- 11: Zusatzöffnung
- 12: Zugvorrichtung
- 13: Extruder
- 14: Vorratsrolle
- 15: Druckvorrichtung

- 100: Zugkraft

## Patentansprüche

1. Verfahren zum Herstellen von Objekten umfassend die Schritte
• Zuführen eines strangförmigen Ausgangsmaterials (2) zu einem Druckkopf (1), wobei das strangförmige Ausgangsmaterial (2) ein Bauteilmaterial (3) und ein Verstärkungsmaterial (4) umfasst,
• Ablösen des Bauteilmaterials (3) von dem Verstärkungsmaterial (4) durch den Druckkopf (1) und Abführen des Verstärkungsmaterials (4), und
• Formen des Objekts durch Aufbringen des Bauteilmaterials (3) auf eine Plattform (5) durch den Druckkopf (1).

2. Verfahren nach Anspruch 1, **dadurch gekennzeichnet, dass** das Ablösen des Bauteilmaterials (3) von dem Verstärkungsmaterial (4) durch Erhitzen des Ausgangsmaterials (2) mittels einer Heizvorrichtung (6) innerhalb des Druckkopfes (1) und Abschmelzen des Bauteilmaterials (3) von dem Verstärkungsmaterial (4) erfolgt.

3. Verfahren nach Anspruch 1 oder 2, **dadurch gekennzeichnet, dass** das Ablösen des Bauteilmaterials (3) von dem Verstärkungsmaterial (4) durch Aufbringen einer Trennkraft zwischen Bauteilmaterial (3) und Verstärkungsmaterial (4) erfolgt.

4. Verfahren nach einem der vorhergehenden Ansprüche, **dadurch gekennzeichnet, dass** das Zuführen des Ausgangsmaterials (2) durch Aufbringen einer Zugkraft (100) auf das Verstärkungsmaterial (4) erfolgt.

5. Verfahren nach Anspruch 4, **dadurch gekennzeichnet, dass** das Verstärkungsmaterial (4) nach Ablösen des Bauteilmaterials (3) aus dem Druckkopf (1) herausgeführt wird, wobei die Zugkraft (100) auf das Verstärkungsmaterial (4) außerhalb des Druckkopfes (1) aufgebracht wird.

6. Druckvorrichtung (15) zum Herstellen von Objekten umfassend einen Druckkopf (1) mit
• einer Zuführungsöffnung (9) zum Zuführen eines strangförmigen Ausgangsmaterials (2), wobei das strangförmige Ausgangsmaterial (2) ein Bauteilmaterial (3) und ein Verstärkungsmaterial (4) umfasst,
• einem Ablösebereich (8), an dem das Bauteilmaterial (3) von dem Verstärkungsmaterial (4) ablösbar ist,
• einer Ausgabeöffnung (10) zum Ausgeben des Bauteilmaterials (3) und zum Aufbringen des Bauteilmaterials (3) auf eine Plattform (5), und
• einer Zusatzöffnung (11) zum Abführen des Verstärkungsmaterials (4) nach dem Ablösen des Bauteilmaterials (3).

7. Druckvorrichtung (15) nach Anspruch 6, **dadurch gekennzeichnet, dass** der Druckkopf eine zumindest vor und/oder an dem Ablösebereich (8) angeordnete Heizvorrichtung (6) zum Erhitzen des Ausgangsmaterials (2) und zum Abschmelzen des Bauteilmaterials (3) von dem Verstärkungsmaterial (4) umfasst.

8. Druckvorrichtung (15) nach Anspruch 6 oder 7, **dadurch gekennzeichnet, dass** der Druckkopf ein an oder in dem Ablösebereich (8) angeordnetes Schälwerkzeug zum Trennen des Bauteilmaterials (3) von dem Verstärkungsmaterial (4) umfasst.

9. Druckvorrichtung (15) nach einem der Ansprüche 6 bis 8, **dadurch gekennzeichnet, dass** die Zusatzöffnung (11) an dem Ablösebereich (8) angeordnet ist.

10. Druckvorrichtung (15) nach einem der Ansprüche 6 bis 9, **gekennzeichnet durch** eine Zugvorrichtung (12) zum Aufbringen einer Zugkraft auf das Verstärkungsmaterial (4), wobei die Zugvorrichtung (12) insbesondere in einer Förderrichtung des Verstärkungsmaterials (4) hinter der Zusatzöffnung (11) des Druckkopfes (1) angeordnet ist.

11. Druckvorrichtung (15) nach einem der Ansprüche 6 bis 10, **gekennzeichnet durch** einen Extruder (13) zum Aufbringen einer Druckkraft auf das Ausgangsmaterial (2), so dass das Ausgangsmaterial (2) von dem Extruder (13) in die Zuführungsöffnung (9) des Druckkopfes (1) drückbar ist.

12. Druckvorrichtung (15) nach einem der Ansprüche 6 bis 11, **dadurch gekennzeichnet, dass** das Bauteilmaterial ein thermoplastischer Kunststoff und/oder das Verstärkungsmaterial (4) ein Draht und/oder eine Faser und/oder ein Faden ist.
